# EUROPÄISCHE PATENTSCHRIFT

(11) **EP 0 759 135 B1**
(45) Veröffentlichungstag und Bekanntmachung des Hinweises auf die Patenterteilung: **25.08.1999**
(21) Anmeldenummer: 94930988.4
(22) Anmeldetag: 27.10.1994
(51) Int. Cl.: F16L 55/162, E03F 3/06

(54) **SANIERUNGSELEMENT FÜR KANÄLE, DRAINAGE-DEPONIERROHRE UND DGL.**
ELEMENT FOR RENOVATING DUCTS, DRAINAGE PIPES, GARBAGE DUMPING PIPES AND THE LIKE
ELEMENT DE REPARATION DE CANALISATIONS, DE TUYAUX DE DRAINAGE, DE TUYAUX DE DECHARGE DE DECHETS ET SIMILAIRES

(30) Priorität: 02.12.1993 DE 9318436 U; 29.03.1994 DE 4410900
(43) Veröffentlichungstag der Anmeldung: 26.02.1997
(73) Patentinhaber: Haas, Helmar, 71686 Remseck (DE)
(72) Erfinder: Haas, Helmar, 71686 Remseck (DE)
(74) Vertreter: Dreiss, Fuhlendorf, Steimle & Becker, Patentanwälte
(86) Internationale Anmeldenummer: EP9403536
(87) Internationale Veröffentlichungsnummer: WO9515460

(56) Entgegenhaltungen:
- EP-A- 0 413 495
- WO-A-93/18334
- DE-U- 8 707 049
- DE-U- 9 313 379
- US-A- 3 642 032
- US-A- 4 897 135

## Beschreibung

Die vorliegende Erfindung bezieht sich auf ein Element zur Sanierung von Rohren, Kanälen oder dergleichen.

Bei einem aus der DE-U-93 13 379 bekannten Sanierungselement sind als Raststufen Anordnungen von Schlitzen im einen Längsrandbereich vorgesehen. In diese Schlitze greifen Lappen, die vom gegenüberliegenden Längsrand vorstehen und an diesem entsprechend den Schlitzanordnungen im Abstand voneinander angeordnet sind. Außerdem ist das Sanierungselement im Bereich beider Seitenbereiche mit einer Führungsvorrichtung aus einem Längsschlitz und diesen durchgreifende Kopfnieten versehen. Auf diese Weise wird eine parallele Aufweitung des Sanierungselementes sichergestellt, die beim bekannten Element sein muß, aber sonst nicht gewährleistet wäre. Würde bei diesem bekannten Sanierungselement eine parallele Aufweitung aufgrund unterschiedlicher Deformationen des zu sanierenden Kanals nicht stattfinden, wäre eine entsprechende Verriegelung nach dem Aufweitprozeß nicht gegeben. Die vom Längsrand vorstehenden Lappen würden in diesem Falle neben die Schlitze greifen.

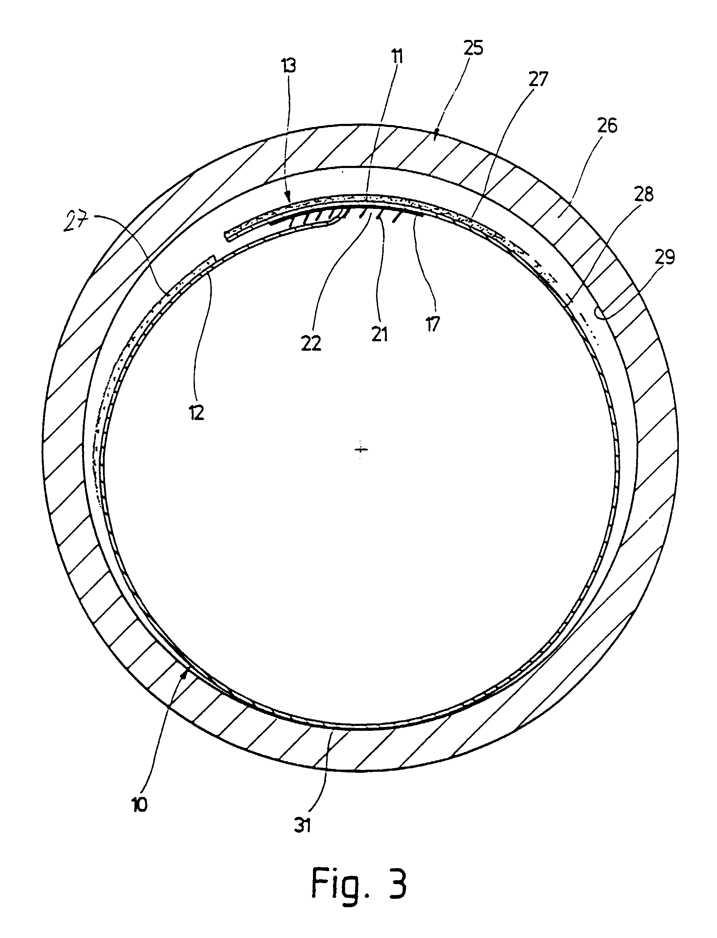

Desweiteren ist aus der EP-A-0 468 058 eine aufweitbare Hülse bekannt geworden, bei der gemäß einem Ausführungsbeispiel (Fig. 3) der Längsrand über seine gesamte Breitenausdehnung umgebogen ist und bei der gemäß einem anderen Ausführungsbeispiel (Fig. 18) die Rastvorrichtungen durch ausgeklinkte Lappen gebildet sind. Diese aufweitbare Hülse ist jedoch nicht als ein Element zur Sanierung von Rohren, Kanälen o.dgl. vorgesehen. Die bekannte Hülse soll einen Abdichtstopfen für einen Abzweigkanal halten, was voraussetzt, dass die Dichtplatte des Abdichtstopfens eben an der Kanalwandung anliegt. Somit dürfen keine Deformationen in diesem Bereich vorhanden sein, so dass sich diese bekannte Hülse auch nur parallel aufweiten können muss und soll.

Aufgabe der vorliegenden Erfindung ist es deshalb, ein Element zur Sanierung von Rohren, Kanälen o.dgl. der eingangs genannten Art zu schaffen, das auch bei einer nicht parallelen Aufweitung der Seitenbereiche des Elementes verrastbar ist.

Zur Lösung dieser Aufgabe sind bei einem Element zur Sanierung von Rohren, Kanälen o.dgl. der eingangs genannten Art die im Anspruch 1 angegebenen Merkmale vorgesehen.

Da der Längsrand des anderen Längsrandbereiches durchgehend mit einer Umbiegung versehen ist und die Rastvorrichtungen durch ausgeklinkte Lappen gebildet sind, ist gewährleistet, dass eine Verrastung auch bei einer nicht parallelen Aufweitung erfolgt, da der umgebogene Längsrand auch in die entsprechenden Lappen, die gegenüber einer zu den Längsrändern parallelen Linie versetzt sind, einrasten kann. Desweiteren können durch die Merkmalskombination die Raststufen erheblich enger gesetzt werden, was zur Qualität der Sanierung wesentlich beiträgt, da ein Zurückgehen der Aufweitung der Sanierungshülse nach der Aufweitdruckentlastung praktisch keine Rolle spielt.

Vorteilhafte Ausgestaltungen bzgl. der Verriegelungseinheit bzw. von deren Rastvorrichtung ergeben sich aus den Merkmalen gemäß einem oder mehreren der Ansprüche 3 bis 6 Beispielsweise ist es möglich, die Rastvorrichtung durch Rastbänder mit entsprechenden ausgeklinkten Raststufen auszubilden. Dabei sind die Rastbänder in geeigneter Weise befestigt. Zur Anpassung an unterschiedliche Aufweitdurchmesser über die Länge der Hülse kann es vorteilhaft sein, die Rastbänder derart einendig an der Hülse zu fixieren, daß sie schwenkbar sind, so daß ihre Raststufen sich gegenüber der Längsachse der Hülse neigen können.

Mit den Merkmalen gemäß Anspruch 7 ist erreicht, daß das Sanierungselement nicht nur aufgrund des radialen Anpreßdruckes im Kanalabschnitt gehalten ist, sondern auch oder insbesondere durch das Klebemittel. Das vorgeschlagene Klebemittel hat den Vorteil, daß eine Abbindezeit entfällt und somit der betreffende Kanalabschnitt sofort wieder in Betrieb genommen werden Kann. Sind dabei die Merkmale gemäß Anspruch 8 und/oder 9 vorgesehen, so ist verhindert, daß das anströmende Wasser bzw. Abwasser sich nicht einen Weg zwischen Außenumfang des Elementes und Innenumfang des Kanalabschnittes sucht, sondern nach innerhalb des Elementes geführt wird.

Insbesondere zur Ausbesserung von Kunststoff-Rohrzügen, wie sie in Deponien verwendet werden, ist es zweckmäßig, eine andere Fixierung der Sanierungshülse vorzusehen. Die in Deponien verwendeten Rohrzüge sind wegen der aggressiven Abwässer aus PVC oder PE und sind stets von einem Feuchtigkeitsfilm überzogen, so daß eine Fixierung durch Klebemittel nicht besonders vorteilhaft ist. In zweckmäßiger Weise sind deshalb bei einem für Deponierohre geeigneten Sanierungselement die Merkmale gemäß Anspruch 10 und/oder 11 vorgesehen. Dadurch dringen die Scheitel der Einpreßdome in den Kunststoff des betreffenden Rohres ein, wobei im letzteren Falle außerdem erreicht ist, daß das Material der Rohrwandung in die Öffnung der Einpreßdome eindringt und so zu einer axialen Fixierung beiträgt.

Für auszubessernde Kanalabschnitte kommen nicht nur gerade Kanalabschnitte sondern auch Abzweigabschnitte in Frage. Um hierfür ein geeignetes Kanalsanierungselement zu schaffen, sind die Merkmale gemäß einem oder mehreren der Ansprüche 12 bis 14 vorgesehen.

Gemäß dem Merkmal des Anspruchs 15 sind die Sanierungselemente in vorteilhafter Weise aus Metall, vorzugsweise aus V4A-Stahl hergestellt, so daß das Sanierungselement auch für aggressive Abwässer geeignet ist.

Sind die Merkmale gemäß Anspruch 16 vorgesehen, ist erreicht, daß die Kanalsohle, die im wesentlichen das Wasser aufnimmt, nach wie vor eine glatte Fläche ist.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in perspektivischer Darstellung ein für im wesentlichen zylindrische Kanäle, Rohre und dgl. geeignetes Sanierungselement in Form einer geschlitzten Hülse gemäß einem ersten Ausführungsbeispiel vorliegender Erfindung,
- Figur 2A: in vergrößerter Darstellung einen Schnitt längs der Linie II-II der Fig. 1,
- Figur 2B: in vergrößerter Darstellung eine Draufsicht auf eines der Rastbänder nach Figur 1, jedoch gemäß einer Variante,
- Figur 2C: einen Schnitt längs der Linie II-II der Fig. 1, jedoch gemäß einem zweiten Ausführungsbeispiel,
- Figur 3: einen Querschnitt durch das in einen Kanal eingebrachte Sanierungselement nach Figur 1,
- Figur 4: eine der Figur 3 entsprechende Darstellung, jedoch eines in ein mit schlüssellochartigem Querschnitt versehenes Drainagerohr eingebrachten Sanierungselements mit entsprechendem Querschnitt, gemäß einem dritten Ausführungsbeispiel vorliegender Erfindung,
- Figur 5A: eine der Figur 3 entsprechende Darstellung, jedoch eines in ein in Deponien verwendetes Kunststoffrohr eingebrachten Sanierungselementes, gemäß einem vierten Ausführungsbeispiel,
- Figur 5B: in vergrößerter Darstellung eine Einzelheit gemäß Kreis VB der Fig. 5A, jedoch in aufgeweiteter Endlage des Sanierungselementes,
- Figur 6A: einen Querschnitt durch ein Sanierungselement in Form eines T-Abzweigstückes gemäß einem fünften Ausführungsbeispiel vorliegender Erfindung und
- Figur 6B: eine Ansicht gemäß Pfeil VIB der Fig. 6A.

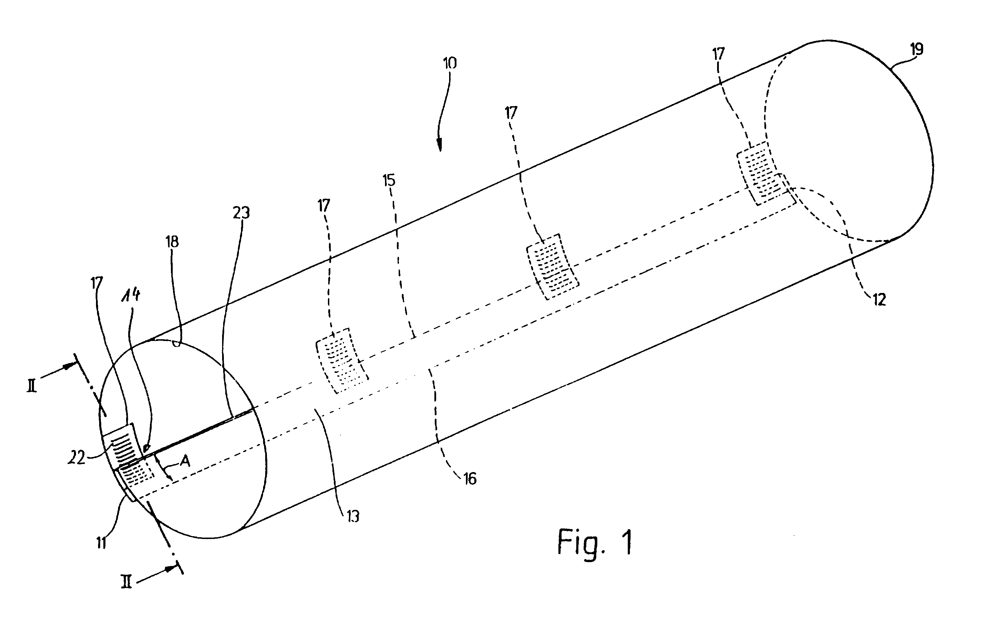

Das in Fig. 1 gemäß einem ersten Ausführungsbeispiel dargestellte Sanierungselement 10 für im wesentlichen zylindrische Kanäle, Rohre und dgl. besitzt die Form einer geschlitzten Hülse. Die Hülse 10 ist aus Metall, vorzugsweise V4A-Stahl hergestellt. Die Längsrandbereiche 11 und 12 der Hülse 10 überlappen einander. Das Blech der Hülse 10 ist derart gerollt, daß im dargestellten Ausgangszustand der Querschnitt der Hülse 10 abgesehen vom dem Überlappungsbereich 13 diametral gegenüberliegenden Bereich von der Kreisform abweicht. Im Überlappungsbereich 13 ist die Kanalsanierungshülse 10 mit einer schloßartigen Verriegelungseinheit 14 versehen, die es ermöglicht, daß die Hülse 10 stufenweise auf einem entsprechend eingestellten Durchmesser gehalten wird.

Der eine Längsrandbereich 11 der Kanalsanierungshülse 10 ist in einem Abstand von dem zugehörigen Längsrand 16 mit einem Teil der Verriegelungseinheit 14, nämlich mit einer als Rastbänder 17 bestimmter Länge ausgebildeten Rastvorrichtung versehen. Die bspw. durch Punktschweißen befestigten Rastbänder 17 sind in Längsrichtung der Kanalsanierungshülse 10 in gleichmäßigen Abständen angeordnet, wobei die jeweils endseitig der Kanalsanierungshülse 10 vorgesehenen Rastbänder 17 nahe der betreffenden Stirnseite 18 bzw. 19 der Hülse 10 befestigt sind.

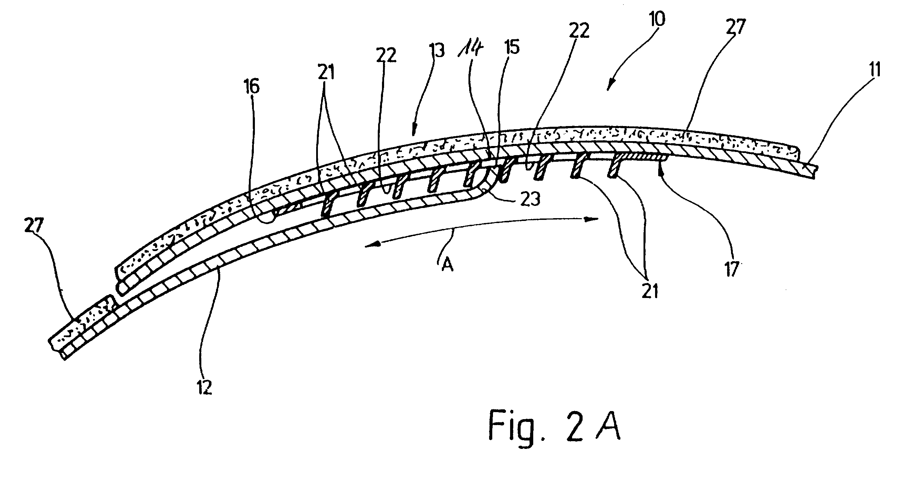

Die Rastbänder 17 besitzen gemäß Figur 2A eine Vielzahl von parallelen Ausklinkungen 21, die sich als Lappen schräg nach innen und zum den anderen Teil der Verriegelungseinheit 14 bildenden Längsrand 15 des anderen Längsrandbereiches 12 hin geneigt erstrecken. Mehrere Lappen 21 sind in Längsrichtung des Rastbandes 17 in gleichmäßigem Abstand zueinander angeordnet. Die Ausklinkungen bzw. Lappen 21 bilden eine Vielzahl von Raststufen 22 am Rastband 17, indem hinter jeden Lappen 21 bzw. zwischen zwei benachbarte Lappen 21 der Längsrand 15 des anderen Längsrandbereiches 12 der Kanalsanierungshülse 10 rastend greifen kann. Dabei ist der Längsrand 15 längs eines schmalen Streifens 23 zu den Rastbändern 17 hin in einem spitzen Winkel umgebogen. Dies stellt ein ständiges Eingreifen des Längsrandes 15 in eine der Ausklinkungen 21 sicher, zumal dieser Längsrandbereich 12 unter einer gewissen radial nach außen gerichteten Vorspannung steht. Je nach der Länge der Rastbänder 17 und der Anzahl der Raststufen 22 kann, wie noch beschrieben werden wird, die Kanalsanierungshülse 10 auf verschiedene Durchmesser gemäß dem Doppelpfeil A aufgeweitet werden. Auch bei maximaler Aufweitung der Hülse 10 bleibt ein Überlappungsbereich 13 zwischen den beiden Längsbereichen 11 und 12 der Hülse 10 erhalten, da die Rastbänder 17 in einem Abstand vom Längsrand 16 angeordnet beginnen. Es versteht sich, daß die Rastbänder 17 statt punktgeschweißt auch vollständig geschweißt oder geklebt oder genietet sein können. Desweiteren ist es möglich, die hier durch Ausklinkungen 21 gebildeten Raststufen 22 durch entsprechende Verformungen an den Rastbändern 17 zu bilden. Beim dargestellten Ausführungsbeispiel beträgt der Abstand der Raststufen 22 etwa 2 mm und die Anzahl der Raststufen 22 bspw. 8 bis 10. Der Abstand der einzelnen Rastbänder 17 in Längsrichtung der Hülse 10 voneinander kann etwa zwischen 5cm und 20cm gewählt werden.

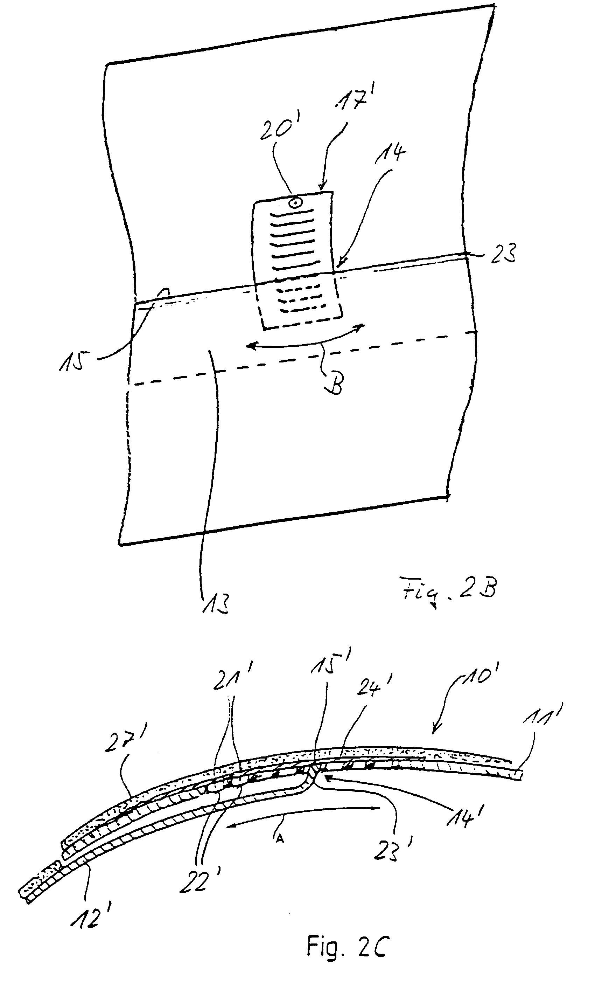

Figur 2B zeigt gemäß einer Variante ein Rastband 17', das entsprechend dem Rastband 17 nach Figur 1 ausgebildet ist, das sich jedoch von diesem hinsichtlich der Befestigung an der Kanalsanierungshülse 10 unterscheidet. Jedes der Rastbänder 17' ist bspw. mittels eines Niets 20' derart befestigt, daß es gemäß Doppelpfeil B schwenkbar ist. Hierzu ist der Niet 20' im Bereich einer der beiden Enden des Rastbandes 17' und im wesentlichen quermittig von diesem angeordnet. Auf diese Weise kann sich das betreffende Rastband 17' entsprechend dem Längsrandbereich 12 bzw. dessen Streifen 23 ausrichten.

Figur 2C zeigt ein zweites Ausführungsbeispiel einer Kanalsanierungshülse 10' mit einer Verriegelungseinheit 14'. Der eine Teil der Verriegelungseinheit 14' ist durch parallele Schlitze 21' gebildet, die unmittelbar im Blech des Längsrandbereiches 11' der Kanalsanierungshülse 10' vorgesehen sind und die jeweils eine Raststufe 22' bilden. Die übereinanderliegenden Schlitze 21' sind jeweils in Gruppen über die Länge der Kanalsanierungshülse 10' im Abstand verteilt angeordnet, so daß die Gruppen von übereinanderliegenden Schlitzen 21' eine Anordnung längs der Kanalsanierungshülse 10' besitzen, wie dies bei den in Figur 1 dargestellten Rastbändern 17 der Hülse 10 der Fall ist. Der andere Teil der Verriegelungseinheit 14' ist dadurch gebildet, daß der Längsrandbereich 12' mit vorstehenden und vorzugsweise umgebogenen Streifenabschnitten 23' versehen ist. Diese Streifenabschnitte 23' können dabei entweder mit einer ebenen Kante 15' versehen sein oder sie können selbst gezackt, gewellt oder eine ähnliche Form aufweisen. Die Breite der Streifenabschnitte 23' ist geringer als die der Schlitze 21'. Zweckmäßigerweise sind die Gruppen von Schlitzen 21' an der dem Längsrandbereich 12' abgewandten Fläche des Längsrandbereiches 11 von einem Klebeband 24' abgedeckt, um zu verhindern, daß das an dieser Rückfläche des Längsrandbereichs 11 vorgesehene Klebemittel 27' durch die Schlitze 21' dringen kann.

Gemäß einer Variante beider vorgenannter Ausführungsbeispiele ist es möglich, den einen Teil der Verriegelungseinheit 14 bzw. 14' insgesamt über einen großen Teil der Länge des Längsrandbereiches 12 bzw. 12' vorzusehen.

In Fig. 3 ist der Einsatz einer Kanalsanierungshülse 10 gemäß dem in Figur 1 dargestellten ersten Ausführungsbeispiel in einem zu sanierenden bzw. auszubessernden Abschnitt 26 eines im wesentlichen zylindrischen Kanals oder Rohres 25 aus Beton, Steingut, Kunststoff oder dgl. dargestellt, wobei es sich versteht, daß auch die Variante nach Figur 2B oder die Kanalsanierungshülse 10' gemäß dem zweiten Ausführungsbeispiel (Figur 2C) entsprechend zu verlegen ist. Ist ein derartiger Kanal 25 an einer Stelle wegen eines nicht dargestellten Defektes ausbesserungsbedürftig, wird eine Hülse 10 entsprechender Länge, von bspw. 50 cm (oder kürzer bzw. länger) in der in Fig. 3 dargestellten "eingerollten" Ausgangsform von einer Einführungsöffnung im Kanal 25 aus mit Hilfe eines an sich bekannten, mittels Druckluft aufblasbaren, länglichen Luftsackes eingeschoben. Vor dem Einschieben der Hülse 10 wird, wie insbesondere Fig. 2A zeigt, die Außenseite 28 teilweise oder vollständig mit einem Klebemittel, bspw. in Form eines Harzes bestrichen. Bspw. kann es zweckmäßig sein, das Klebemittel 27 nur im oberen Bereich der Außenseite 28 der Hülse 10 anzubringen, da die Unterseite über einen gewissen Winkelbereich auf der Sohle des Kanals 25 bis hin zum Kanalabschnitt 26 gleiten können muß. Die Hülse 10 ist dabei so angeordnet, daß ihr Überlappungsbereich 13 der Kanalsohle 31 abgewandt, vorzugsweise oben im Kanal 25 angeordnet ist. Ist die Hülse 10 mit Hilfe des nicht dargestellten Luftsacks zu der auszubessernden Stelle am Kanalabschnitt 26 gebracht, was bspw. mit Hilfe einer Kamera erfolgen kann, wird der Luftsack weiter aufgeblasen, so daß sich die geschlitzte Hülse 10 entgegen ihrer nach innen gerichteten Vorspannung gemäß dem Doppelpfeil A aufweitet und sich mit ihrer Außenseite 28 bzw. den darauf aufgebrachten Klebemittel 27 gegen die Innenwandung 29 des Kanals 25 anlegt. Bei diesem Aufweiten gemäß Doppelpfeil A bewegen sich die die Raststufen 22 aufweisenden Rastbänder 17 und der umgebogene Längsrand 15 des anderen Längsrandbereiches 12 relativ zueinander, wobei der Längsrand 15 über die Rastlappen 21 stufenartig gleitet und in der Endposition der Hülse 10, in der diese sich an die Innenwandung 29 des Kanals 25 anlegt, in eine bestimmte Raststufe 22 bzw. hinter eine Rastausklinkung 21 rastet. Der Luftsack kann dann wieder drucklos gemacht und zurückgefahren werden. Die Kanalsanierungshülse 10 ist dann, wenn das Klebemittel 27 abgebunden hat, innerhalb des auszubessernden Kanalabschnitts 26 unbeweglich gehalten.

In nicht dargestellter Weise ist zumindest diejenige Stirnseite 18, 19 der Hülse 10, die der Abwasserströmungsrichtung im Kanal 25 entgegengerichtet ist, mit einer Bördelung nach außen versehen, deren Größe etwa der Dicke des aufgebrachten Klebemittels 27 entspricht und die damit einen gewissen Schutz des Klebemittels gegenüber dem möglicherweise aggressiven Abwasser bietet.

Da das für die Kanalsanierungshülse 10 bzw. 10' verwendete Blech relativ dünnwandig und beim Aufweiten federnd elastisch und in der Länge auch in gewisser Weise verwindbar ist, ist es möglich, daß innerhalb eines zu sanierenden Kanal- oder Rohrabschnittes 26 unterschiedliche Innendurchmesser an den Enden der aufgeweiteten Hülse 10, 10' vorhanden sind und somit die eingebrachte Hülse 10, 10' möglicherweise leicht konisch sein kann. Dies ist deshalb problemlos, weil die Verrastungen an den Enden der Hülse 10, 10' dann in unterschiedlichen Raststufen 22 bzw. 22' erfolgen. In entsprechender Weise wirkt die Variante nach Figur 2B, deren Rastbänder 17' schwenkbar sind.

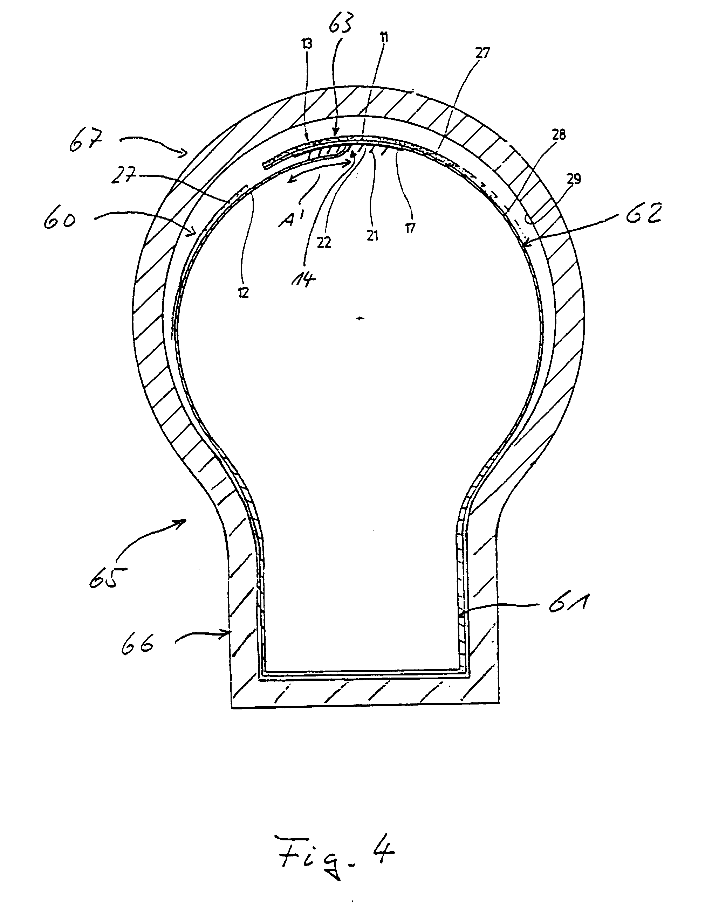

Figur 4 zeigt ein in ein mit einem schlüssellochartigen Querschnitt versehenes Drainagerohr 65, wie es im Bahnbereich verwendet wird, eingebrachtes Sanierungselement 60, dessen Querschnittsform, ebenso wie beim Ausführungsbeispiel der Figur 3 dem Querschnitt des Drainagerohrs 65 angepaßt ist. Das einstückige Sanierungselement 60 besitzt somit einen U-förmigen Sohlenabschnitt 61, der in eine U-förmige Rohrsohle 66 mit Spiel paßt, und einen gemäß Doppelpfeil A' aufweitbaren Rohrabschnitt 62, der innerhalb des oberen Bereichs 67 des Drainagerohr 65 angeordnet ist und der mit dem U-förmigen Sohlenabschnitt 61 einstückig ist. Der Rohrabschnitt 62 besitzt in seinem Scheitelbereich 63 die in den Figuren 1, 2A bzw. 2B und 3 dargestellte Verriegelungseinheit 14. Es versteht sich, daß auch die Verriegelungseinheit 14' vorgesehen sein kann. Das Einbringen des Sanierungselementes 60 in das Drainagerohr 65 und das Festsetzen des Sanierungselementes 60 in einem beschädigten Bereich des Drainagerohrs 65 erfolgt in der Weise, wie es anhand der Figur 3 für das Sanierungselement 10 im Kanal 25 beschrieben ist.

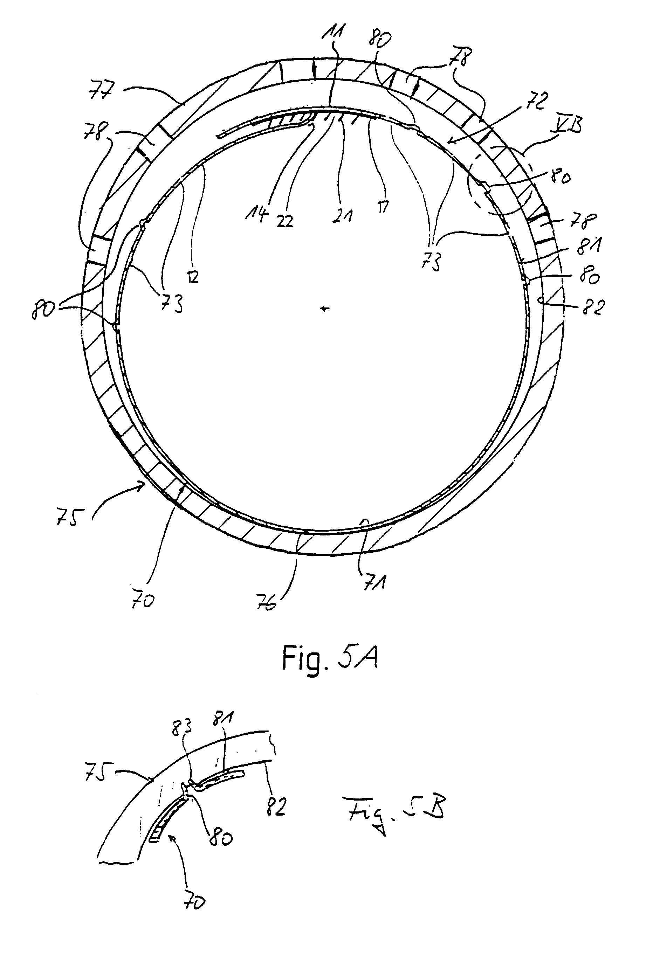

Figur 5 zeigt die Anwendung vorliegender Erfindung bei einem Sanierungselement 70 für ein Kunststoffrohr 75, wie es in Deponien verwendet wird. Die in Abfall- bzw. Mülldeponien verlegten Rohre 75 sind zum Sammeln der dort anfallenden Abwässer an ihrem der Fließsohle 76 gegenüberliegenden oberen Bereich 77 mit einer Vielzahl von Drainagelöchern 78 über ihre gesamte Länge versehen. Die einzelnen Rohre 75 jedes Deponierohrzuges sind wegen der ggf. aggressiven Abwässer aus einem geeignetem Kunststoff, wie PVC, PE oder dgl. gefertigt. Das dort verwendete Sanierungselement 70 ist im Scheitelbereich mit der Verriegelungseinheit 14 (oder 14') und gegenüberliegend mit einer durchgehenden Fließsohle 71 versehen. Der obere, der Fließsohle 71 abgewandte Bereich 72 des Sanierungselementes 70 ist mit Drainagelöchern 73 versehen.

Zur Fixierung des Sanierungselementes 70 innerhalb eines Kunststoffrohres 75 ist der obere Bereich 72, der erst in der in den Deponierohrzug 75 eingebrachten Stellung aufgeweitet und gegen die Innenwandung 82 des Deponierohres gebracht wird, mit Einpreßdomen 80 versehen, die über die Außenseite 81 des Sanierungselementes 70 ragen. Die Einpreßdome 80 sind über diesen oberen Bereich 72 des Sanierungselementes 70 gleichmäßig verteilt angeordnet, insbesondere in dem Bereich, der sich in aufgeweitetem Zustand gegen die Innenwandung 82 des Deponierohres 75 legt. Die Einpreßdome 80 sind in ihrem Scheitelbereich 83 offen, so daß bei Anlegen des Sanierungselementes 70 an die Innenwandung 82 des Rohrzugs 75 und damit bei Eindringen der Scheitelbereiche der Einpreßdome 82 in den Kunststoff des Rohrzuges 85 dieser Kunststoff zwischen die Scheitelwandungen der Einpreßdome 80 dringen kann. Auf diese Weise ergibt sich eine unverrückbare Halterung des Sanierungselementes 70 innerhalb des oder der zu sanierenden Rohre 75. Es versteht sich, daß statt der konusartigen Einpreßdome 80, wie sie in Figur 5 dargestellt sind, auch geschlossene spitzen- oder schneidenartige Vorsprünge möglich sind.

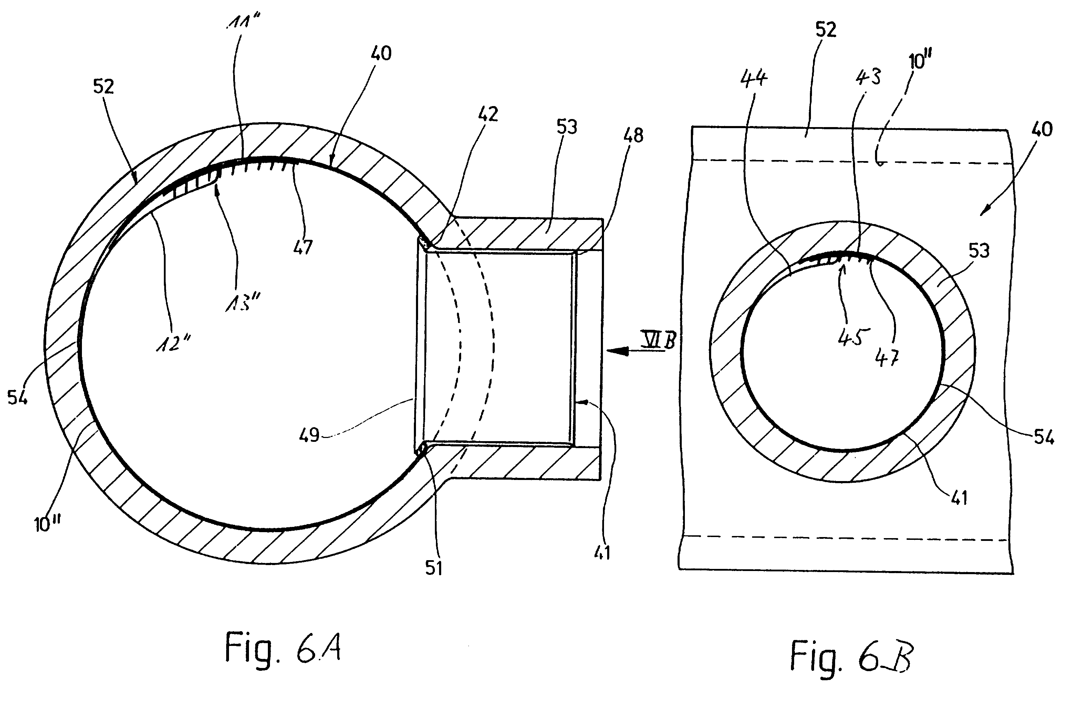

Figur 6 zeigt ein Sanierungselement 40 gemäß einem fünften Ausführungsbeispiel in Form eines T-förmigen Abzweigstückes. Dieses T-Abzweigstück 40 ist aus einer Kanalsanierungshülse 10" und einer Kurzhülse 41 zusammengesetzt. Die Kanalsanierungshülse 10" entspricht der Kanalsanierungshülse 10 oder 10', bis auf die Tatsache, daß die Kanalsanierungshülse 10" an einer Stelle ihres Umfanges (nicht im Überlappungsbereich 13") und ihrer Längserstreckung mit einer Öffnung 42 runden Querschnitts versehen ist. In diese Öffnung 42 ist die Kurzhülse 41 eingeschoben, die wie die Kanalsanierungshülse 10, 10' und 10" aufweitbar und in entsprechenden Aufweitpositionen verrastbar ausgebildet ist. Die hier durchmesserkleinere Kurzhülse 41 besitzt somit ebenfalls Längsrandbereiche 43 und 44, die einander überlapen und somit einen Überlappungsbereich 45 bilden, wobei der Längsrandbereich 43 mit mindestens einem Rastband 47 versehen ist. Die Kurzhülse 41 ist außenseitig mit der vorerwähnten und in der Fig. 1 bis 3 nicht dargestellten, nach außen gerichteten Bördelung 48 versehen. Innenseitig besitzt die Kurzhülse 41 einen geneigten Ringflansch 49, der die Öffnung 42, deren Durchmesser größer ist als dem Außendurchmesser der Bördelung 48 entspricht, hintergreift, wobei zwischen Ringflansch 49 und dem betreffenden Innenwandungsbereich der Hülse 10" Klebemittel 51 aufgebracht ist.

Die Montage geht wie folgt vor sich: Die Kurzhülse 41, deren Durchmesser kleiner ist als der der Hülse 10", ist in die Kurzhülse 10" hinein verschoben und bspw. durch eine entsprechende Verrastung der Längsrandbereiche 43 und 44 mit ihrer Bördelung 48 nach außen weisend in die Öffnung 42 lose gehalten. In dieser Lage kann das Kanalsanierungselement 40 mit Hilfe eines Luftsackes in einen kreisrunden Kanal 25 bis zu dem betreffenden Kanalabschnitt 52, der mit dem Abzweigkanalabschnitt 53 versehen ist, eingefahren werden. Liegt die Kurzhülse 41 diesem Abzweigkanalabschnitt 53 gegenüber, kann die Kurzhülse 41 mit Hilfe eines von dieser Seite her eingebrachten Luftsackes gegriffen und aus der Hülse 10" herausgezogen werden. Beide Hülsen 10" und 41 sind außenumfangsseitig mit Klebemittel 54 teilweise oder ganz bestrichen. Mit Hilfe der beiden Luftsäcke werden die Hülse 10" und die Hülse 41 solange aufgeweitet, bis sie sich an die Innenwandung des Kanalabschnitts 52 bzw. des Abzweigkanalabschnitts 53 anlegen. Die Fig. 6A und 6B zeigen diesen aufgeweiteten und fertig montiert eingebrachten Zustand des Kanalsanierungselementes 40.

Wenn auch bei diesem dargestellten Ausführungsbeispiel des Kanalsanierungselementes 40 von einem T-förmigen Abzweig die Rede ist, versteht es sich, daß die erfindungsgemäßen Maßnahmen auch bei anders gearteten Abzweigen zur Sanierung in diesem Bereich eingesetzt werden können.

Gemäß einem weiteren nicht dargestellten Ausführungsbeispiel ist ein T-förmiges Abzweig-Sanierungselement vorgesehen, das aus einem Sanierungselement 60 nach Fig. 4 und einem entsprechenden Kurzelement, das in das Sanierungselement 60 seitlich einführbar ist, zusammengesetzt. Dieses Kurzelement ist entsprechend dem Sanierungselement 60 aufweitbar und verrastbar ausgerichtet. Die Montage dieses Abzweig-Sanierungselementes entspricht im wesentlichen der zu Fig. 6 beschriebenen.

## Patentansprüche

1. Element zur Sanierung von Rohren, Kanälen o.dgl., mit einer längsgeschlitzten Hülse (10, 60, 70), deren Längsrandbereiche (11, 12) einander überlappen und die in eine Endlage aufweitbar ist, in der die Längsrandbereiche (11, 12) stufenweise miteinander derart verrastbar sind, daß in jeweils eine von mehreren Raststufen (22) von über die Länge der Hülse in vorzugsweise gleichmäßigem Abstand angeordneten Rastvorrichtungen (17), die Bestandteil einer an den Längsrandbereiche (11, 12) der geschlitzten Hülse vorgesehenen Verriegelungseinheit (14) sind, zumindest Teilbereiche des Längsrandes (15, 16) des anderen Längsrandbereiches (12, 11) einrastbar sind, und bei welchem Element.
der Längsrand (15, 16) des anderen Längsrandbereiches (12, 11) über seine gesamte Längenausdehnung hinweg zum einen Längsrandbereich (12, 11) bzw. zu dessen Rastvorrichtung (17) hin umgebogen ist, dadurch gekennzeichnet, daß
l.1. jede Rastvorrichtung (17) durch parallele, entgegen der Aufweitrichtung schräg gestellten Stege (21) in Form von ausgeklinkten Lappen (21) gebildet,
und
1.2. der umgebogene Längsrand (15, 16) des anderen Längsrandbereiches (12, 11) an seinen axialen Enden in unterschiedlichen Aufweitstellungen in die Rastvorrichtung (17) einrastbare, ist.

2. Element nach Anspruch 1, dadurch gekennzeichnet, daß die Rastvorrichtung durch ein an einem Längsrandbereich (11, 12) in Querrichtung befestigtes Band (17) gebildet ist, aus dem die Lappen der Stege (21)) ausgeklinkt sind.

3. Element nach Anspruch 1 oder 2, dadurch gekennzeichnet, daß die Rastvorrichtungen (17) längs der Hülse (10, 60, 70) in einem Abstand zwischen etwa 5cm und 20cm angeordnet sind.

4. Element nach einem der Ansprüche 1 bis 3, dadurch gekennzeichnet, daß die Stege bzw. Lappen (21) in einem Rasterabstand von etwa 2mm vorgesehen sind.

5. Element nach einem der Ansprüche 2 bis 4, dadurch gekennzeichnet, daß das Band (17) auf dem Längsrandbereich (11, 12) der Hülse (10, 60, 70) aufgeklebt, aufgeschweißt oder aufgenietet ist.

6. Element nach mindestens einem der vorhergehenden Ansprüche, dadurch gekennzeichnet, daß die Verriegelungseinheit (14) sich über einen wesentlichen Teil der Länge der Hülse (10, 60, 70) erstreckt.

7. Element nach mindestens einem der vorhergehenden Ansprüche, dadurch gekennzeichnet, daß der Außenumfang der Hülse (10, 60), vorzugsweise ohne Überlappungsbereich (13), mit einem Klebemittel (27) bspw. einem Harzklebemittel bestrichen ist.

8. Element nach mindestens einem der vorhergehenden Ansprüche, dadurch gekennzeichnet, daß der stirnseitige Rand (18, 19) der Hülse (10, 60, 70) zur Außenseite hin umgebördelt ist.

9. Element nach den Ansprüchen 7 und 8, dadurch gekennzeichnet, daß die Größe der Umbördelung des stirnseitigen Randes (18, 19) der Hülse (10) etwa der Dicke des Auftrags des Klebemittels (27) entspricht.

10. Element nach mindestens einem der Ansprüche 1 bis 6, dadurch gekennzeichnet, daß die Hülse (70) längs zumindest eines Teilbereichs ihres Außenumfanges und vorzugsweise zu beiden Seiten ihres Überlappungsbereichs (13) mit Einpreßdomen (80) versehen ist.

11. Element nach Anspruch 10, dadurch gekennzeichnet, daß die Einpreßdome (80)) im Bereich ihrer Scheitel (83) mit einer Öffnung versehen sind.

12. Element nach mindestens einem der vorhergehenden Ansprüche, dadurch gekennzeichnet, daß die geschlitzte Hülse (10") an einem Längsbereich und dem Überlappungsbereich (13") der Längsrandbereiche (11", 12") abgewandt mit einer Öffnung (42)) versehen ist, durch die eine Kurzhülse (41) passend steckbar ist.

13. Element nach Anspruch 12, dadurch gekennzeichnet, daß die Kurzhülse (41) geschlitzt und aufweitbar ist und mit einem Überlappungsbereich (45) und mindestens einer Rastvorrichtung (47) versehen ist.

14. Element nach Anspruch 12 oder 13, dadurch gekennzeichnet, daß die Kurzhülse (41) einendig mit einem umgebogenen Stirnrand (49) versehen ist, auf dessen Innenseite ein Klebemittel (51) aufgetragen ist.

15. Element nach mindestens einem der vorhergehenden Ansprüche, dadurch gekennzeichnet, daß die Hülse (10, 60, 70) aus Metall, vorzugsweise V4A-Stahl ist.

16. Element nach mindestens einem der vorhergehenden Ansprüche, dadurch gekennzeichnet, daß der Überlappungsbereich (13, 45) bei in einen Kanal, Rohr oder dgl. (25, 65, 75) eingebrachten Element (10, 60, 70) der Kanalsohle abgewandt angeordnet ist.

## Claims

1. An element for renovating pipes, ducts or the like, comprising a longitudinally slit sleeve (10. 60. 70) whose longitudinal edge regions (11. 12) overlap each other and which can be expanded into a limit position in which the longitudinal edge regions (11. 12) are latchable to each other step-wise in such a way that engageable into a respective one of a plurality of latching steps (22) of latching devices (17) which are arranged at preferably uniform spacings over the length of the sleeve and which are a component of a locking unit (14) provided at the longitudinal edge regions (11. 12) of the slitted sleeve, are at least partial regions of the longitudinal edge (15. 16) of the other longitudinal edge region (12. 11), and in which element the longitudinal edge (15, 16) of the other longitudinal edge region (12, 11), over its entire longitudinal extent, is bent over towards a longitudinal edge region (12. 11) or its latching device (17), characterised in that
1.1. each latching device (17) is formed by parallel webs (21) which are inclined in opposite relationship to the expansion direction, in the form of outwardly displaced tongues (21). and
1.2. the bent-over longitudinal edge (15, 16) of the other longitudinal edge region (12. 11) is engageable at its axial ends into the latching device (17) in different expansion positions.

2. An element according to claim 1 characterised in that the latching device is formed by a band (17) which is fixed to a longitudinal edge region (11. 12) in the transverse direction and out of which the tongues of the webs (21) are displaced.

3. An element according to claim 1 or claim 2 characterised in that the latching devices (17) are arranged along the sleeve (10, 60, 70) at a spacing of between about 5 cm and 20 cm.

4. An element according to one of claims 1 to 3 characterised in that the webs or tongues (21) are disposed at a pitch of about 2 mm.

5. An element according to one of claims 2 to 4 characterised in that the band (17) is glued, welded or riveted on the longitudinal edge region (11. 12) of the sleeve (10. 60, 70).

6. An element according to at least one of the preceding claims characterised in that the locking unit (14) extends over a substantial part of the length of the sleeve (10. 60. 70).

7. An element according to at least one of the preceding claims characterised in that the outer periphery of the sleeve (10, 60), preferably without an overlap region (13). is coated with an adhesive (27), for example a resin adhesive.

8. An element according to at least one of the preceding claims characterised in that the end edge (18. 19) of the sleeve (10, 60. 70) is flanged over towards the outside.

9. An element according to claims 7 and 8 characterised in that the size of the flanged-over portion of the end edge (18. 19) of the sleeve (10) approximately corresponds to the thickness of the applied coating of adhesive (27).

10. An element according to at least one of claims 1 to 6 characterised in that the sleeve (70) is provided with press-in domes (80) along at least a portion of its outer periphery and preferably at both sides of its overlap region.

11. An element according to claim 10 characterised in that the press-in domes (80) are provided with an opening in the region of their apex (83).

12. An element according to at least one of the preceding claims characterised in that the slitted sleeve (10") is provided with an opening (42) at a longitudinal region and remote from the overlap region (13") of the longitudinal edge regions (11", 12"), through which opening (42) a short sleeve (41) can be passed to fit therein.

13. An element according to claim 12 characterised in that the short sleeve (41) is slitted and expandable and is provided with an overlap region (45) and at least one latching device (47).

14. An element according to claim 12 or claim 13 characterised in that the short sleeve (41) is provided at one end with a bent-over end edge (42), to the inside of which is applied an adhesive (51).

15. An element according to at least one of the preceding claims characterised in that the sleeve (10, 60, 70) is of metal, preferably V4A-steel.

16. An element according to at least one of the preceding claims characterised in that when the element (10, 60. 70) is fitted into a duct, pipe or the like (25, 65. 75) the overlap region (13. 45) is arranged away from the bottom of the duct.

## Revendications

1. Elément pour la rénovation de tubes, canaux ou analogues, comportant une gaine à fente longitudinale (10, 60, 70) dont les zones de bord longitudinal (11, 12) sont en recouvrement et qui peut s'élargir dans une position finale dans laquelle les zones de bord longitudinal (11, 12) peuvent se cranter l'une avec l'autre par échelons de telle manière que, dans chacun d'une pluralité de gradins de crantage (22) de dispositifs de crantage (17) qui sont disposés de préférence à égale distance sur la longueur de la gaine et qui constituent un élément constitutif d'une unité de verrouillage (14) prévue sur les zones de bord longitudinal (11, 12) de la gaine à fente longitudinale, peuvent s'accrocher par crantage au moins des zones partielles du bord longitudinal (15, 16) de l'autre zone de bord longitudinal (12, 11), élément dans lequel le bord longitudinal (15, 16) de l'autre zone de bord longitudinal (12, 11) est recourbé sur toute son étendue longitudinale en direction d'une zone de bord longitudinale (12, 11) ou du dispositif de crantage (17) de cette dernière, caractérisé en ce que
1.1. chaque dispositif de crantage (17) est formé de barrettes parallèles disposées obliquement par rapport à la direction de l'élargissement et sous la forme d'agrafes formées par encochage (21) et
1.2. le bord longitudinal (15, 16) recourbé de l'autre zone de bord longitudinal (12, 11) peut s'accrocher par crantage à ses extrémités axiales dans différentes positions d'élargissement dans le dispositif de crantage (17).

2. Elément selon la revendication 1, caractérisé en ce que le dispositif de crantage est formé par une bande qui est (17) fixée selon la direction transversale sur la zone de bord longitudinal (11, 12) et à partir de laquelle on forme par encochage les agrafes des barrettes (21).

3. Elément selon la revendication 1 ou 2, caractérisé en ce que les dispositifs de crantage (17) sont disposés le long de la gaine (10, 60, 70) avec un écartement compris entre environ 5 cm et 20 cm.

4. Elément selon l'une quelconque des revendications 1 à 3, caractérisé en ce que les barrettes ou agrafes (21) sont prévues avec une distance de crantage d'environ 2 mm.

5. Elément selon l'une quelconque des revendications 2 à 4, caractérisé en ce que la bande (17) est collée, soudée ou rivetée sur la zone de bord longitudinal (11, 12) de la gaine (10, 60, 70).

6. Elément selon l'une quelconque des revendications précédentes, caractérisé en ce que l'unité de verrouillage (14) s'étend sur une partie importante de la longueur de la gaine (10, 60, 70).

7. Elément selon l'une quelconque des revendications précédentes, caractérisé en ce que la périphérie extérieure de gaine (10, 60), de préférence sans zone de recouvrement (13), est enduite d'un produit adhésif (27), par exemple d'un produit adhésif à base de résine.

8. Elément selon l'une quelconque des revendications précédentes, caractérisé en ce que le bord frontal (18, 19) de la gaine (10, 60, 70) est rabattu en direction de la face extérieure.

9. Elément selon l'ensemble des revendications 7 et 8, caractérisé en ce que la grandeur du rabat du bord frontal (18, 19) de la gaine (10) correspond sensiblement à l'épaisseur de la couche du produit adhésif.

10. Elément selon l'une quelconque des revendications 1 à 6, caractérisé en ce que la gaine (70) est munie de dômes injectés (80) le long d'au moins une zone partielle de sa périphérie extérieure et, de préférence, des deux côtés de sa zone de recouvrement (13).

11. Elément selon la revendication 10, caractérisé en ce que les dômes injectés (80) présentent une ouverture dans la zone de leur sommet.

12. Elément selon l'une quelconque des revendications précédentes, caractérisé en ce que la gaine à fente (10") est munie, dans une zone longitudinale opposée à la zone de recouvrement (13") des zones de bord longitudinal (11", 12"), d'une ouverture (42) dans laquelle une gaine courte (41) peut être placée avec adaptation.

13. Elément selon la revendication 12, caractérisé en ce que la gaine courte (41) est fendue et peut s'élargir et est munie d'une zone de recouvrement (45) et d'au moins .un dispositif de crantage (47).

14. Elément selon l'ensemble des revendications 12 et 13, caractérisé en ce que la gaine courte (41) est munie, à une de ses extrémités, d'un bord frontal (49) recourbé sur la face intérieure duquel est appliqué un produit adhésif (51).

15. Elément selon l'une quelconque des revendications précédentes, caractérisé en ce que la gaine (10, 60, 70) est en métal, de préférence de l'acier V4A.

16. Elément selon l'une quelconque des revendications précédentes, caractérisé en ce que la zone de recouvrement (12, 45) est disposée, dans le cas d'un élément (10, 60, 70) placé dans un canal, un tube ou analogue (25, 65, 75), du côté opposé au fond du canal.
